# EUROPÄISCHE PATENTSCHRIFT

(11) **EP 1 819 451 B1**
(45) Veröffentlichungstag und Bekanntmachung des Hinweises auf die Patenterteilung: **19.03.2014**
(21) Anmeldenummer: 05811328.3
(22) Anmeldetag: 05.12.2005
(51) Int. Cl.: F26B 23/00

(54) **VERFAHREN UND ANLAGE ZUM BESCHICHTEN EINES METALLBANDS MIT EINER LÖSEMITTELHALTIGEN BESCHICHTUNG UND ZUM TROCKNEN UND/ODER VERNETZEN DERSELBEN**
METHOD AND INSTALLATION FOR COATING A METAL STRIP WITH A COATING CONTAINING A SOLVENT AND FOR DRYING AND/OR CROSS-LINKING SAID COATING
PROCEDE ET INSTALLATION POUR ENDUIRE UNE BANDE METALLIQUE D'UN REVETEMENT CONTENANT UN SOLVANT ET POUR SECHER ET/OU RETICULER CE REVETEMENT

(30) Priorität: 13.12.2004 DE 102004059903
(43) Veröffentlichungstag der Anmeldung: 22.08.2007
(73) Patentinhaber: Value & Intellectual Properties Management GmbH, 83052 Bruckmühl (DE); Adphos Advanced Photonics Technologies AG, 83052 Bruckmühl (DE)
(72) Erfinder: DIBON, Andreas, 72149 Neustetten (DE); BÄR, Kai, 83043 Bad Aibling (DE)
(74) Vertreter: Ricker, Mathias
(86) Internationale Anmeldenummer: PCT/EP2005/012989
(87) Internationale Veröffentlichungsnummer: WO 2006/063705

(56) Entgegenhaltungen:
- DE-A1- 10 158 008
- DE-U1- 20 202 512
- US-A- 5 092 059

## Beschreibung

Die vorliegende Erfindung betrifft ein Verfahren zum Beschichten eines Metallbands mit einer lösemittelhaltigen Beschichtung und zum Trocknen und/oder Vernetzen derselben gemäß dem vorliegenden Anspruch 1.

Außerdem betrifft die Erfindung eine Anlage zum Beschichten eines Metallbands mit einer lösemittelhaltigen Beschichtung und zum Trocknen und/oder Vernetzen derselben gemäß dem vorliegenden Anspruch 7.

Beschichtete, insbesondere lackierte Metallbänder haben in vielen industriellen Bereichen Einzug gehalten. Besonders die Tatsache, daß Metallbänder auf einfache Weise als Spule aufgewickelt gelagert und direkt von der Spule abgewickelt bereits vor einer Formgebung beschichtet werden können, macht sie für viele Anwendungen interessant.

Mittlerweile sind, beispielsweise aus der DE 101 58 008 A1 und US 5 092 059, Verfahren und Vorrichtungen bekannt, welche zur Trocknung und/oder Vernetzung der Beschichtung des Metallbandes elektromagnetische Strahler, insbesondere Infrarot-Strahler einsetzen. Solche Infrarot-Strahler benötigen eine Kühlung, die durch eine Flüssigkeit, aber auch durch ein Kühlgas, insbesondere Kühlluft, erfolgen kann, welches die Abwärme der Strahlungsquellen aufnimmt.

In einer solchen Tröckenvorrichtung setzt sich die Infrarot-Strahlung im wesentlichen in der Beschichtung in Wärme um, wodurch das Lösemittel in kurzer Zeit aus der Beschichtung verdrängt wird und/oder eine Vernetzung der Beschichtung erfolgt.

Das im Innenraum der Trockenvorrichtung freigesetzte Lösemittel muß aus diesem entfernt werden. Dazu wird ein. Gas, vorzugsweise Luft, in den Innenraum geleitet, welches vorher auf eine Temperatur über der Kondensationstemperatur des Lösemittels gebracht wurde. Dieses Gas nimmt das Lösemittel auf; beide werden an anderer Stelle des Innenraums aus diesem abgesaugt.

Eine solche Trockenvorrichtung weist also einen Gas- bzw. Lufthaushalt auf, wobei insgesamt große Gasmengen benötigt werden, die mit einem relativ hohen Energieaufwand konditioniert, insbesondere temperiert werden müssen.

Konditioniert bedeutet allgemein, daß das Gas in bestimmten Parametern wie beispielsweise Reinheit, Feuchtigkeit und Temperatur auf gegebene Anforderungen abgestimmt wird.

Aufgabe der Erfindung ist es, ein Verfahren und eine Anlage der eingangs genannten Art derart weiterzuentwickeln, daß die benötigte Gasmenge insgesamt verringert und die erforderliche Energiemenge reduziert wird.

Dies wird verfahrensmäßig dadurch gelöst, daß der Strahlungsquelle zugeführtes Kühlgas nach Durchströmen der Strahlungsquelle und Aufnahme von deren Abwärme temperiert wird und in den Innenraum der Trockenvorrichtung geleitet wird.

Dadurch wird erreicht, daß ein und dasselbe Gas und somit ein und dieselbe Gasmenge einerseits dafür verwendet wird, die Strahlungsquelle zu kühlen, andererseits in den Innenraum der Trockenvorrichtung geführt wird, um dort freigesetztes Lösemittel zu entfernen.

Folglich verringert sich die Gesamt-Gasmenge gegenüber dem Stand der Technik, bei dem eine erste Gasmenge zur Kühlung der Strahlungsquellen und eine weitere Gasmenge für den Innenraum der Trockenvorrichtung verwendet werden mußten, die den einzelnen Komponenten getrennt zugeführt wurden.

Das Gas, welches die Strahlungsquelle zur Kühlung durchströmt hat, ist zwangsläufig gegenüber seiner Temperatur beim Einströmen in die Strahlungsquelle erwärmt. Dies bedeutet, das die bereits vorhandene Energie in Form der Abwärme der Strahlungsquelle dazu genutzt wird, den Gasstrom vor Eintritt in den Innenraum der Trockenvorrichtung zu erwärmen oder zumindest vorzuwärmen.

Dadurch kann der Energiebedarf, der nötig ist, um das Gas auf eine für den Innenraum der Trockenvorrichtung geeignete Temperatur zu bringen, verringert werden.

Das in den Innenraum der Trockenvorrichtung geleitete Gas wird unmittelbar vor dem Eintreten in den Innen-raum temperiert, so daß seine Temperatur über der Kondensationstemperatur des eingesetzten Lösemittels liegt. Falls das von der Strahlungsquelle erwärmte Gas diese Temperatur nicht aufweist, ist die dazu benötigte Energiemenge noch immer geringer als beim Temperieren des Gases ausgehend von beispielsweise Raumtemperatur.

Bie der Energieform handelt es sich um Infrarot-Strahlung. Dies hat den Vorteil, daß die Wärme durch Absorption der Infrarot-Strahlung direkt in der Beschichtung entsteht.

Dabei ist es vorteilhaft, wenn die Wellenlänge der Infrarot-Strahlung zwischen etwa 0,8 *µ*m und etwa 3;0 *µ*m, insbesondere zwischen etwa 0,8 *µ*m und etwa 1,5 *µ*m liegt. Dies sind die Wellenlängenbereiche im nahen Infrarot-Bereich, in denen gängige Lösemittel und gängige Beschichtungen günstige Absorptionsbanden aufweisen.

Als Gas ist Luft besonders geeignet.

Wenn der Innenraum der Beschichtungsvorrichtung von einem konditionierten Gas durchströmt wird, kann das Verfahren weitergeführt werden, indem das durch den Innenraum der Beschichtungsvorrichtung hindurch geströmte Gas der Strahlungsquelle wenigstens teilweise als Kühlgas zugeführt wird.

Es wurde erkannt, daß das Gas, welches den Innenraum der Beschichtungsvorrichtung verläßt, den Strahlungsquellen trotz der von dem Gas aufgenommenen Lösemittel als Kühlgas zugeführt werden kann, ohne daß die Gefahr besteht, daß sich das lösemittelbelastete Gas bei der Erwärmung in den Strahlungsquellen entzündet.

Durch diese Maßnahme kann die benötigte Gesamt-Gasmenge weiter verringert werden.

Es ist vorteilhaft, wenn die Verweildauer des Metallbandes in der Trockenvorrichtung weniger als 20 Sekunden und noch besser weniger als 2 Sekunden beträgt.

Die hiermit erzielbaren Vorteile entsprechen sinngemäß den oben geschilderten Vorteilen des erfindungsgemäßen Verfahrens.

Bei einer Ausführungsform ist auf dem Strömungsweg des Gases von der Strahlungsquelle zum Innenraum der Trockenvorrichtung ein Wärmetauscher und/oder eine Brenneranordnung vorgesehen, durch welche das Gas temperierbar ist, so daß seine Temperatur über der Kondensationstemperatur des Lösemittels liegt. Damit wird auf günstige Weise sichergestellt, daß das Gas, falls dessen Temperatur nicht den Anforderungen entspricht, auf eine geeignete Temperatur gebracht werden kann.

Vorteilhaft ist die Strahlungsquelle zur Abgabe von Infrarot-Strahlung ausgebildet, und zwar zweckmäßig in einem Wellenlängenbereich zwischen etwa 0,8 *µ*m und etwa 3,0 *µ*m, insbesondere zwischen etwa 0,8 *µ*m und etwa 1,5 *µ*m. Zu den Vorteilen darf auf die obigen Ausführungen zu dieser Strahlung und diesen Wellenlängenbereichen verwiesen werden.

Es ist günstig, wenn das Gas Luft ist.

Bei einer Ausführungsform der Anlage, bei welcher der Innenraum der Beschichtungsvorrichtung von einem konditionierten Gas durchströmt wird, ist eine Absaugvorrichtung vorgesehen, mit welcher das konditionierte Gas aus dem Innenraum der Beschichtungsvorrichtung abgezogen und wenigstens teilweise in die Kühlgas-Zufuhreinrichtung geleitet werden kann.

Auch hierzu darf auf die entsprechenden oben zu dem Verfahren genannten Vorteile verwiesen werden, welche sinngemäß gelten.

Eine gut Regulierung der Menge an Kühlgas, welche der Strahlungsquelle zugeführt wird, kann über eine Verbindungseinrichtung erfolgen, welche die Absaugeinrichtung mit der Kühlgas-Abführeinrichtung verbinden kann. So kann gegebenenfalls weniger Gas zu der Strahlungsquelle geleitet werden, als vom Innenraum der Beschichtungsanlage kommt. Da das umgeleitete Gas in die Kühlgas-Abführeinrichtung geleitet wird, welche das Gas weiter zur Trockenzonen-Gaszufuhreinrichtung fördert, wirkt sich dies nicht auf die Menge an Gas aus, die in den Innenraum der Trockenvorrichtung geleitet wird.

Bei einer weiteren vorteilhaften Ausführungsform umfasst das Gehäuse einen Außenmantel und einen Innenmantel, wobei die Strahlungsquelle in einer Nische des Innenmantels angeordnet ist. Der Zwischenraum zwischen Außen- und Innenmantel kann dabei zu Isolations- oder Kühlzwecken genutzt werden. Die Anordnung der Strahlungsquelle in einer Nische ermöglicht die Ausbildung eines durchgängigen Trockentunnels.

Bevorzugt ist beidseits des Bewegungswegs des Metallbands im Innenraum der Trockenvorrichtung mindestens eine Strahlungsquelle angeordnet. So werden bei einem einzigen Durchgang des Metallbandes durch die Vorrichtung die Beschichtungen auf seinen beiden Seiten getrocknet und/oder vernetzt.

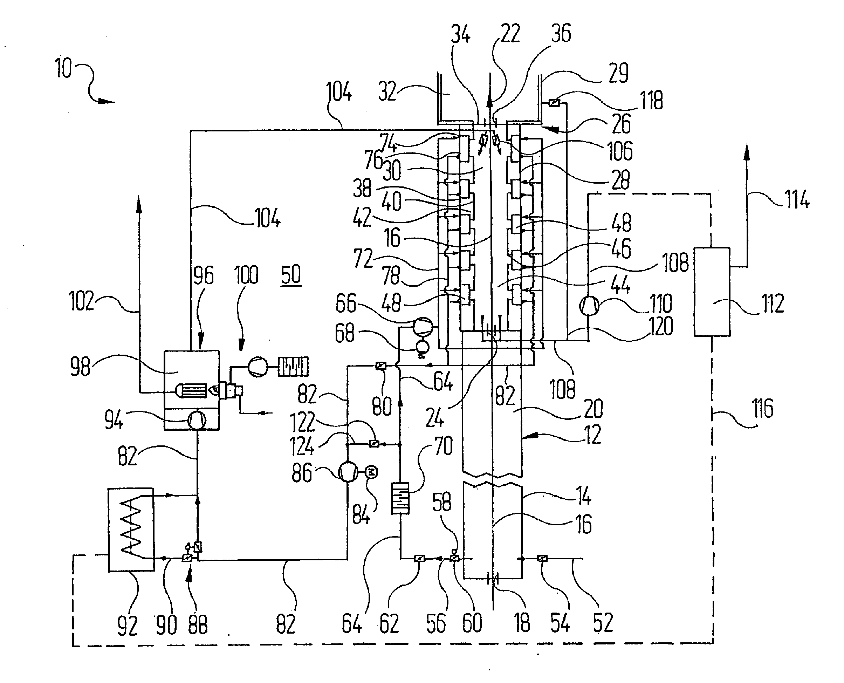

Ein Ausführungsbeispiel der Erfindung wird nachfolgend anhand der Zeichnung näher erläutert; die einzige Figur zeigt schematisch eine Behandlungsanlage 10 in Aufsicht, in der ein Metallband mit einer lösemittelhaltigen Beschichtung versehen und diese Beschichtung getrocknet und/oder vernetzt wird.

Die Behandlungsanlage 10 umfasst eine Beschichtungsvorrichtung 12 mit einem Gehäuse 14. Ein Metallband 16 wird nach vorheriger Reinigung in vertikaler Ausrichtung durch eine Einlaßöffnung 18 des Gehäuses 14 in dessen Innenraum 20 geführt. Die Bewegungsrichtung des Metallbands 16 ist durch den Pfeil 22 angedeutet.

Im Innenraum 20 der Beschichtungsvorrichtung 12 wird das Metallband 16 mittels bekannter Techniken mit einer lösemittelhaltigen Beschichtung, insbesondere einem Lack, versehen.

Nach dem Durchlaufen der Beschichtungsvorrichtung 12 wird das nunmehr beschichtete Metallband 16 durch eine Verbindungsöffnung 24 in eine Trockenzone 30 einer an die Beschichtungsvorrichtung 12 angrenzende Trockenvorrichtung 26 geführt. Die Trockenzone 30 ist von einem Gehäuse 28 umgeben.

Ein weiteres Gehäuse 29 umgibt eine Kühl- bzw. Abdunstzone 32 der Trockenvorrichtung 26, die durch eine Zwischenwand 34 mit einer Durchlaßöffnung 36 von der Trockenzone 30 getrennt ist.

Das Gehäuse 28 der Trockenzone 30 umfasst einen seitlichen Außenmantel 38 sowie einen seitlichen Innenmantel 40, welche einen Zwischenraum 42 begrenzen. Insgesamt bildet das Gehäuse 28 einen tunnelartigen Innenraum 44, durch welchen sich das zu trocknende Metallband 16 bewegt.

In Nischen 46 des Innenmantels 40 sind auf beiden Seiten des Bewegungsweges des Metallbands 16 Strahlungsquellen in Form von Infrarot-Strahlern 48 eingesetzt, die auf eine weiter unten genauer erläuterte Weise luftgekühlt sind.

Die Infrarot-Strahler 48 geben eine Strahlung ab, die im wesentlichen im Wellenlängenbereich des nahen Infrarotsprektrums, insbesondere im Wellenlängenbereich von etwa 0,8 *µ*m bis 3,0 *µ*m und bevorzugt von etwa 0,8 *µ*m bis etwa 1,5 *µ*m liegt.

Diese Infrarot-Strahlung durchdringt dabei die Beschichtung des Metallbands 16 zunächst von außen nach innen, wird an der metallischen Oberfläche des Metallbands 16 reflektiert und passiert sodann die Beschichtung ein zweites Mal. Ein kleiner Teil der Infrarot-Strahlung wird gegebenenfalls in dem Metallband 16 bzw. an dessen Oberfläche in Wärme umgesetzt.

Die Wellenlänge der Infrarot-Strahlung wird dabei auf das Material der Beschichtung so abgestimmt, daß möglichst die gesamte Infrarot-Strahlung bei dem zweimaligen Durchgang durch die Beschichtung vollständig absorbiert wird, daß also möglichst wenig Infrarot-Strahlung nach der Reflexion wieder aus der Beschichtung austritt. Die richtige Wellenlänge hierfür läßt sich aus den Absorptionsbanden des Beschichtungsmaterials ermitteln.

Nachdem das mit Infrarot-Strahlung behandelte Metallband 16 die Trockenzone 30 der Trockenvorrichtung 26 durchlaufen hat, wenn es sich also durch die Durchlaßöffnung 36 in die Kühl- bzw. Abdunstzone 32 bewegt, ist der Trocknungs-/Vernetzungsprozeß der Beschichtung im wesentlichen abgeschlossen. In der Abdunstzone 32 entwickeln sich nur noch sehr wenige Lösemitteldämpfe, die in einer weiter unten genauer erläuterten Weise abgesaugt werden.

Das Austreiben des Lösemittels aus der Beschichtung des Metallbands 16 in der Trockenzone 30 geschieht sehr rasch auf einer sehr kurzen Wegstrecke, die das Metallband 16 dazu zurücklegen muß. Gleiches gilt für einen sich anschließenden Vernetzungsprozeß, der mit großer Geschwindigkeit abläuft.

Der gesamte Trocknungs- und/oder Vernetzungsprozeß läuft in weniger als 20 Sekunden ab und kann sogar in weniger als 2 Sekunden abgeschlossen sein.

Bei der Behandlungsanlage 10 werden der Innenraum 20 der Beschichtungsvorrichtung 12, der Innenraum 44 der Trockenzone 30 der Trockenvorrichtung 26 und die Infrarot-Strahler 48 mit einem Gas in Form von Luft zu unterschiedlichen Zwecken bei verschiedenen Temperaturen beaufschlagt. Dazu umfasst die Behandlungsvorrichtung 10 ein Lufthaushalt-Regulierungssystem 50, welches nachstehend zusammen mit seiner Funktionsweise erläutert wird.

Im Innenraum 20 der Beschichtungsvorrichtung 12 verteilen sich aufgrund des Beschichtungsvorgangs Lösemitteldämpfe, gegebenenfalls zusammen mit überschüssigem Beschichtungsmaterial. Um diese aus der Beschichtungsvorrichtung 12 zu entfernen, wird deren Innenraum 20 über mehrere Zuleitungen 52, von denen der Übersichtlichkeit halber in der Zeichnung nur eine gezeigt ist, konditionierte Frischluft zugeführt. Konditioniert bedeutet, wie bereits erwähnt, daß die Frischluft in einem vorgelagerten Prozeß in beispielsweise Reinheit, Temperatur und Feuchtigkeit auf die Anforderungen abgestimmt wird, die eine solche in den Innenraum einer Beschichtungsvorrichtung geleitete Luft erfüllen muß.

Die Zuleitungen 52 weisen eine Regulierklappe 54 auf, über die der Gesamtdurchsatz eingestellt werden kann. Statt einer Regulierklappe 54 kann auch ein drehzahlgesteuerter Ventilator eingesetzt werden.

Nachdem die so zugeführte Frischluft den Innenraum 20 der Beschichtungsvorrichtung 12 durchströmt hat, wird sie nunmehr lösemittelbelastet über mehrere Absaugleitungen 56 abgesaugt, welche sich entlang des Innenraumes 20 der Beschichtungsvorrichtung 12 verteilen und von denen der Übersichtlichkeit halber in der Zeichnung nur eine gezeigt ist. Im Strömungsweg durch die Absaugleitung 56 befindet sich eine von einem Motor 58 gesteuerte Klappe 60, so daß die Absaug-Volumenleistung entlang des Innenraums 20 eingestellt werden kann.

Die Absaugleitungen 56 münden in einer Regulierklappe 62 einer Sammelleitung 64. Die Sammelleitung 64 ist mit einem Gebläse 66 verbunden, welches von einem Motor 68 angetrieben ist und welches die lösemittelbelastete Luft aus dem Innenraum 20 der Beschichtungsvorrichtung 12 absaugt. Die Absaugleitungen 56, die Sammelleitung 64 und das Gebläse 66 bilden so gemeinsam eine Absaugeinrichtung.

Auf dem Strömungsweg zwischen der Regulierklappe 62 und dem Gebläse 66 durchströmt die abgesaugte Luft einen Filter 70, welcher einen Anteil des Lösemittels und/oder des abgesaugten Oversprays zurückhält.

Das Gebläse 66 leitet die so bereits einmal verwendete Luft in eine Verteilerleitung 72, durch welche die Luft zu jeweils einem Kühlluft-Einlaß der Infrarot-Strahler 48 geleitet wird, wobei in der Zeichnung nur ein Kühlluft-Einlaß mit dem Bezugszeichen 74 versehen ist. Das Gebläse 66 und die Verteilerleitung 72 bilden also eine Kühlgas-Zufuhreinrichtung, wobei das Gebläse 66 als Verbindungsglied zwischen der oben erwähnten Absaugeinrichtung 56, 64, 66 und der Kühlgas-Zufuhreinrichtung 66, 72 dient.

Nachdem die Luft innere Kanäle (nicht dargestellt) der Infrarot-Strahler 48 durchströmt hat, tritt sie nunmehr durch die Abwärme der Infrarot-Strahler 48 auf ca. 70° C bis 100° C erwärmt jeweils über einen Kühlluft-Auslaß der Infrarot-Strahler 48, von denen in der Zeichnung nur einer mit dem Bezugszeichen 76 versehen ist, in eine Abführleitung 78.

Diese führt die so verbrauchte Kühlluft in eine etwas stromabwärts mit einer Regulierklappe 80 versehene Sammelleitung 82 zusammen. Letztere ist mit einem von einem Motor 84 angetriebenen Gebläse 86 verbunden; die Abführleitung 78, die Sammelleitung 82 und das Gebläse 86 bilden so zusammen eine Kühlgas-Abführeinrichtung.

Die Luft wird durch die Sammelleitung 82 zu einer Klappenanordnung 88 weitergefördert, durch die der Luftstrom wahlweise vollständig oder teilweise über eine Wärmetauscherleitung 90 durch einen Wärmetauscher 92 oder über die Sammelleitung 82 an diesem vorbei geleitet werden kann.

Die Wärmetauscherleitung 90 mündet nach Durchlaufen des Wärmetauschers 92 wieder in der Sammelleitung 82, die stromab dieser Mündungsstelle mit einem Gebläse 94 verbunden ist, welches die Luft durch eine Aufheizvorrichtung 96 fördert.

Die Luft sollte zu diesem Zeitpunkt eine Temperatur von etwa 250° C erreicht haben. Falls die Luft kühler ist, wird sie durch eine Brenneranordnung 100 der Aufheizvorrichtung 96 auf diese Temperatur gebracht. Entstehende Verbrennungsgase werden über eine Abführleitung 102 aus dem Brennraum 98 der Aufheizvorrichtung 96 abgezogen.

Die etwa 250° C heiße Luft wird durch das Gebläse 94 weiter in eine Zufuhrleitung 104 gefördert, welche über Regulierklappen 106 in der Nähe der Durchlaßöffnung 36 in der Zwischenwand 32 der Trockenvorrichtung 26 in deren Innenraum 44 der Trockenzone 30 mündet.

Das Gebläse 94 und die Zufuhrleitung 104 mit ihren Regulierklappen 106 bilden somit eine Trockenzonen-Gaszufuhreinrichtung.

Die so dem Innenraum der Trockenzone 30 zugeführte Luft durchströmt die Trockenzone 30 im Gegenstrom entgegen der Bewegungsrichtung des Metallbands 16, um das aufgrund des Trocknungs-/Vernetzungsprozesses freigesetzte Lösemittel aus der Trockenzone 30 der Trockenvorrichtung 26 auszutragen. Beim Durchströmen der Trockenzone 30 der Trockenvorrichtung 26 erhitzt sich die Luft weiter auf etwa 270° C.

In der Nähe der Verbindungsöffnung 24 zwischen der Beschichtungsvorrichtung 12 und der Trockenvorrichtung 26 wird die Luft nach Durchströmen der Trockenzone 30 aus dieser über eine Absaugleitung 108, die mit einem Gebläse 110 verbunden ist, abgesaugt. Diese abgesaugte Luft, wird mit einer Temperatur zwischen etwa 180° und etwa 200° C einer Abgasreinigung, beispielsweise einer thermischen Nachverbrennungsvorrichtung 112 zugeführt. Die so gereinigte heiße Abluft kann dann entweder über eine Abluftleitung 114 in die Atmosphäre geleitet werden oder aber, wie es in der Zeichnung durch die gestrichelte Leitung 116 angedeutet ist, dem Wärmetauscher 92 zugeführt werden, um die Luft in der Wärmeaustauschleitung 90 auf die gewünschte Temperatur zu bringen.

In die Absaugleitung 108 mündet stromauf des Gebläses 110 eine über eine Regulierklappe 118 mit der Abdunstzone 32 verbundene Absaugleitung 120. Dadurch wird freigesetztes Lösemittel aus der Abdunstzone 32 der Trockenvorrichtung 26 abgesaugt.

Zwischen dem Filter 70 und dem Gebläse 66 ist die Sammelleitung 64, durch welche die lösemittelbelastete Luft aus dem Innenraum 20 der Beschichtungsvorrichtung 12 strömt, über eine mit einer Regulierklappe 122 versehene Verbindungsleitung 124 stromauf des Gebläses 86 mit der Sammelleitung 82 verbunden, durch welche die verbrauchte Kühlluft der Infrarot-Strahler 48 strömt. So kann die den Infrarot-Strahlern 48 zugeführte Luftmenge durch ein teilweises direktes Überführen von der Sammelleitung 64 in die Sammelleitung 82 abhängig von der Stellung der Regulierklappe 118 eingestellt werden.

Bei der oben erläuterten Behandlungsanlage 10 werden verschiedene Funktionen an unterschiedlichen eine Luftzufuhr benötigenden Bereichen der Behandlungsanlage 10 durch dieselbe Luft erfüllt. Bei dem oben beschriebenen Ausführungsbeispiel wird konditionierte Frischluft zunächst dafür verwendet, überschüssiges Lösemittel und gegebenenfalls Beschichtungsmaterial aus der Beschichtungsvorrichtung 12 auszutragen. Danach dient diese Luft der Kühlung der in der Trockenvorrichtung 26 eingesetzten Infrarot-Strahler 48 und schließlich wird die somit bereits zweifach genutzte Luft verwendet, um im Gegenstrom freigesetztes Lösemittel aus der Trockenzone 30 der Trockenvorrichtung 26 zu entfernen.

Durch diese Mehrfachverwendung einer der Behandlungsanlage 10 nur einmal zugeführten Gasmenge kann die insgesamt benötigte Gasmenge gegenüber dem Stand der Technik bei einer solchen Behandlungsanlage verringert und das eingesetzte Gas somit insgesamt effizienter genutzt werden.

Auch energetisch ergeben sich Vorteile. Insbesondere wird der Kühlgasstrom der Infrarot-Strahler 48 zur Vorwärmung des Gases verwendet, welches in den Innenraum 44 der Trockenzone 30 der Trockenvorrichtung 26 geleitet wird. Dies verringert neben der Gasmenge den Energieaufwand, welcher normalerweise dazu nötig ist, um für den Innenraum einer Trockenzone gedachtes Gas auf eine bestimmte Temperatur zu bringen.

Die Temperatur des Gases, welches dem Innenraum der Trockezone 30 der Trockenvorrichtung 26 zugeführt wird, liegt dabei im wesentlichen über der Kondensationstemperatur des eingesetzten Lösemittels.

## Patentansprüche

1. Verfahren zum Beschichten eines Metallbands (16) mit einer lösemittelhaltigen Beschichtung und zum Trocknen und/oder Vernetzen derselben, bei dem
a) das Metallband im Innenraum (20) einer Beschichtungsvorrichtung (12) mit der Beschichtung versehen wird;
b) das beschichtete Metallband (16) durch eine Trockenvorrichtung (26) geführt wird, in deren Innenraum (44)
ba) das beschichtete Metallband (16) von wenigstens einer durch Kühlgas gekühlten Strahlungsquelle (48) mit einer Infrarot-Strahlung beaufschlagt wird, die sich in der Beschichtung und/oder dem Metallband (16) in Wärme umsetzt, und
bb) ein Gas eingeleitet wird,
**dadurch gekennzeichnet, dass**
c) der Strahlungsquelle (48) zugeführtes Kühlgas nach Durchströmen der Strahlungsquelle (48) und Aufnahme von deren Abwärme in den Innenraum (44) der Trockenvorrichtung (26) geleitet wird;
d) das in den Innenraum (44) der Trockenvorrichtung (26) geleitete Gas vorher temperiert wird, so dass seine Temperatur über der Kondensationstemperatur des Lösemittels liegt.

2. Verfahren nach Anspruch 1, **dadurch gekennzeichnet, dass** die Wellenlänge der Infrarot-Strahlung zwischen etwa 0,8 µm und etwa 3,0 µm, insbesondere zwischen etwa 0,8 µm und 1,5 µm liegt.

3. Verfahren nach einem der Ansprüche 1 bis 2, **dadurch gekennzeichnet, dass** als Gas Luft verwendet wird.

4. Verfahren nach einem der Ansprüche 1 bis 3, bei welchem der Innenraum (20) der Beschichtungsvorrichtung (12) von einem konditionierten Gas durchströmt wird, **dadurch gekennzeichnet, dass** das durch den Innenraum (20) der Beschichtungsvorrichtung (12) hindurch geströmte Gas der Strahlungsquelle (48) wenigstens teilweise als Kühlgas zugeführt wird.

5. Verfahren nach einem der Ansprüche 1 bis 4, **dadurch gekennzeichnet, dass** das Metallband (16) in weniger als 20 Sekunden durch die Trockenvorrichtung (26) geführt wird.

6. Verfahren nach Anspruch 5, **dadurch gekennzeichnet, dass** das Metallband (16) in weniger als 2 Sekunden durch die Trockenvorrichtung (26) geführt wird.

7. Anlage zum Beschichten eines Metallbands (16) mit einer lösemittelhaltigen Beschichtung und zum Trocknen und/oder Vernetzen derselben, welche umfasst:
a) eine Beschichtungsvorrichtung (12) mit einem Gehäuse (14), in dessen Innenraum (20) das Metallband (16) mit der Beschichtung versehen wird;
b) eine Trockenvorrichtung (26) mit
ba) einem Gehäuse (28), durch welches das beschichtete Metallband (16) hindurchbewegt wird;
bb) mindestens einer im Innenraum (44) des Gehäuses (28) in der Nähe des Bewegungsweges des Metallbands (16) angeordneten durch Kühlgas gekühlten Strahlungsquelle (48), die das Metallbands (16) mit einer Infrarot-Strahlung beaufschlagt, die sich in der Beschichtung und/oder dem Metallband (16) in Wärme umsetzt;
bc) einer Trockenzonen-Gasfuhreinrichtung (94, 104, 106), mit der Gas in den Innenraum (44) einleitbar ist;
bd) einer Kühlgas-Zufuhreinrichtung (66, 72), mit welcher der Strahlungsquelle (48) Kühlgas zuführbar ist;
be) einer Kühlgas-Abführeinrichtung (78, 82, 86), mit welcher Kühlgas nach Durchströmen der Strahlungsquelle (48) und Aufnahme von deren Abwärme abführbar ist,
**dadurch gekennzeichnet, dass**
c) die Kühlgas-Abführeinrichtung (78, 82, 86) derart mit der Trockenzonen-Gasfuhreinrichtung (94, 104, 106) verbunden ist, dass abgeführtes Kühlgas in die Trockenzonen-Gaszufuhreinrichtung (94, 104, 106) leitbar ist;
d) auf dem Strömungsweg (78, 82, 104) des Gases von der Strahlungsquelle (48) zum Innenraum (44) der Trockenvorrichtung (26) ein Wärmetauscher (92) und/oder eine Brenneranordnung (100) vorgesehen ist, durch welche das Gas temperierbar ist, so dass seine Temperatur über der Kondensationstemperatur des Lösemittels liegt.

8. Anlage nach Anspruch 7, **dadurch gekennzeichnet, dass** die Strahlungsquelle (48) zur Abgabe von Strahlung mit einer Wellenlänge zwischen etwa 0,8 µm und etwa 3,0 µm, insbesondere zwischen etwa 0,8 µm und 1,5 µm ausgebildet ist.

9. Anlage nach einem der Ansprüche 7 bis 8, **dadurch gekennzeichnet, dass** das Gas Luft ist.

10. Anlage nach einem der Ansprüche 7 bis 9, bei welcher der Innenraum (20) der Beschichtungsvorrichtung (12) von einem konditionierten Gas durchströmt wird, **dadurch gekennzeichnet, dass** eine Absaugeinrichtung (56, 64, 66) vorgesehen ist, mit welcher das konditionierte Gas aus dem Innenraum (20) der Beschichtungsvorrichtung (12) abgezogen und wenigstens teilweise in die KühlgasZufuhreinrichtung (66, 72) geleitet werden kann.

11. Anlage nach Anspruch 7, **dadurch gekennzeichnet**, das die Absaugeinrichtung (56, 64, 66) über eine Verbindungseinrichtung (122, 124) mit der KühlgasAbführeinrichtung (78, 82, 86) verbindbar ist.

12. Anlage nach einem der Ansprüche 7 bis 11, **dadurch gekennzeichnet, dass** das Gehäuse (28) der Trockenvorrichtung (26) einen Außenmantel (38) und einen Innenmantel (40) umfasst und die Strahlungsquelle (48) in einer Nische (46) des Innenmantels (40) angeordnet ist.

13. Anlage nach einem der Ansprüche 7 bis 12, **dadurch gekennzeichnet, dass** beidseits des Bewegungswegs des Metallbands (16) im Innenraum (44) der Trockenvorrichtung (26) mindestens eine Strahlungsquelle (48) angeordnet ist.

## Claims

1. Method for coating a metal band (16) with a solvent-containing coating and drying and/or crosslinking same, in which
a) the metal band is provided with a coating in the internal space (20) of a coating device (12);
b) the coated metal band (16) is guided through a drying device (26), in the internal space (44) of which
ba) the coated metal band (16) is exposed to infrared radiation by means of at least one radiation source (48), which is cooled by means of a cooling gas, wherein the infrared radiation is transformed in the coating and/or the metal band (16) into heat, and
bb) a gas is introduced,
**characterized in that**
c) the cooling gas which is fed to the radiation source (48) is guided into the internal space (44) of drying device (26) after having passed the radiation source (48) and absorbing the waste heat thereof.
d) the gas guided into the internal space (44) of drying device (26) is tempered prior to the guidance such that the temperature thereof is above the condensation temperature of the solvent.

2. Method according to claim 1, **characterized in that** the wavelength of the infrared radiation is between about 0.8 µm and about 3.0 µm, in particular between about 0.8 µm and 1,5 µm.

3. Method according to one of claims 1 to 2, **characterized in that** air is used as gas.

4. Method according to one of claims 1 to 3, in which the internal space (20) of drying device (12) is streamed through by a conditioned gas, **characterized in that** the gas streaming through the internal space (20) of coating device (12) is fed to the radiation source (48) at least partially as cooling gas.

5. Method according to any one of claims 1 to 4, **characterized in that** the metal band (16) is guided through the drying device (26) in less than 20 seconds.

6. Method according to claim 5, **characterized in that** the metal band (16) is guided through the drying device (26) in less than 2 seconds.

7. Device for coating a metal band (16) with a solvent-containing coating and drying and/or crosslinking the same, which comprises:
a) a coating device (12) having a housing (14), in whose internal space (20) the metal band (16) is provided with a coating;
b) a drying device (26) having
ba) a housing (28) through which the coated metal band (16) is moved;
bb) at least one radiation source (48), which is arranged in internal space (44) of housing (28) close to the movement path of metal band (16), wherein radiation source (48) is cooled by means of cooling gas, wherein the metal band(16) is exposed to an infrared radiation, which is transformed into heat in the coating and/or the metal band (16);
bc) a drying zone gas supply device (94, 104,106) by means of which gas can be introduced into internal space (44);
bd) a cooling gas supply device (66, 72) by means of which cooling gas can be supplied to radiation source (48);
be) a cooling gas delivery device (78, 82, 86) by means of which cooling gas can be delivered after passing through the radiation source (48) and absorbing the waste heat thereof,
**characterized in that**
c) the cooling gas delivery device (78, 82, 86) is connected to the drying zone gas supply device (94, 104, 106) such that delivered cooling gas can be guided into the drying zone gas supply device (94, 104, 106);
d) on the flow path (78, 82, 104) of the gas from the radiation source (48) to internal space (44) of drying device (26) a heat exchanger (92) and/or a burner arrangement (100) is provided by means of which the gas can be tempered such that the temperature thereof is above the condensation temperature of the solvent.

8. Device according to claim 7, **characterized in that** the radiation source (48) is developed for emission of radiation having a wavelength between about 0.8 µm and about 3.0 µm, in particular between about 0.8 µm and 1.5 µm.

9. Device according to any one of claims 7 to 8, **characterized in that** the gas is air.

10. Device according to any one of claims 7 to 9, in which a conditioned gas streams through the internal space (20) of coating device (12), **characterized in that** a suction device (56, 64, 66) is provided by means of which the conditioned gas is stripped from internal space (20) of coating device (12) and can at least partially be guided into the cooling gas supply device (66, 72).

11. Device according to claims 7, **characterized in that** the suction device (56, 64, 66) can be connected to the cooling gas delivery device (78, 82, 86) by means of a connecting device (122, 124).

12. Device according to any one of claims 7 to 11, **characterized in that** the housing (28) of drying device (26) comprises an over jacket (38) and an inner jacket (40) and the radiation source (48) is arranged in a niche (46) of inner jacket (40).

13. Device according to any one of claims 7 to 12, **characterized in that** at least one radiation source (48) is arranged on both sides of movement path of metal band (16) in the internal space (44) of drying device (26).

## Revendications

1. Procédé pour le revêtement d'une bande métallique (16) avec un revêtement contenant un solvant et pour le séchage et/ou la réticulation de celui-ci, dans lequel
a) la bande métallique est munie du revêtement dans un espace interne (20) d'un dispositif de revêtement (12) ;
b) la bande métallique revêtue (16) est introduite à travers un dispositif de séchage (26), dans l'espace interne duquel (44)
ba) la bande métallique revêtue (16) est exposée au moins à une source de rayonnement refroidie par un gaz réfrigérant (48) avec un rayonnement infrarouge, qui se transforme dans le revêtement et/ou la bande métallique (16) en chaleur, et
bb) un gaz est introduit,
**caractérisé en ce que**
c) le gaz réfrigérant introduit dans la source de rayonnement (48) est dirigé, après passage à travers la source de rayonnement (48) et prélèvement de la chaleur dissipée de celle-ci, dans l'espace interne (44) du dispositif de séchage (26) ;
d) le gaz introduit dans l'espace interne (44) du dispositif de séchage (26) est préalablement amené à température constante, de sorte que sa température est supérieure à la température de condensation du solvant.

2. Procédé selon la revendication 1, **caractérisé en ce que** la longueur d'onde du rayonnement infrarouge est d'environ 0,8 µm à environ 3,0 µm, en particulier d'environ 0,8 µm à 1,5 µm.

3. Procédé selon l'une quelconque des revendications 1 à 2, **caractérisé en ce que** l'on utilise de l'air comme gaz.

4. Procédé selon l'une quelconque des revendications 1 à 3, dans lequel l'espace interne (20) du dispositif de revêtement (12) est traversé par un gaz conditionné, **caractérisé en ce que** le gaz qui passe à travers l'espace interne (20) du dispositif de revêtement (12) est introduit dans la source de rayonnement (48) au moins partiellement comme un gaz réfrigérant.

5. Procédé selon l'une quelconque des revendications 1 à 4, **caractérisé en ce que** la bande métallique (16) est introduite en moins de 20 secondes à travers le dispositif de séchage (26).

6. Procédé selon la revendication 5, **caractérisé en ce que** la bande métallique (16) est introduite en moins de 2 secondes à travers le dispositif de séchage (26).

7. Dispositif pour le revêtement d'une bande métallique (16) avec un revêtement contenant un solvant et pour le séchage et/ou la réticulation de celui-ci, lequel comprend :
a) un dispositif de revêtement (12) avec un boîtier (14), dans l'espace interne (20) duquel la bande métallique (16) est munie du revêtement ;
b) un dispositif de séchage (26) avec
ba) un boîtier (28), à travers lequel la bande métallique revêtue (16) est déplacée ;
bb) au moins une source de rayonnement (48) refroidie par un gaz réfrigérant, disposée dans l'espace interne (44) du boîtier (28) à proximité de la trajectoire de déplacement de la bande métallique (16), laquelle expose la bande métallique (16) à un rayonnement infrarouge, qui se transforme dans le revêtement et/ou dans la bande métallique (16) en chaleur ;
bc) un dispositif d'introduction de gaz-zones de séchage (94, 104, 106), avec lequel du gaz peut être introduit dans l'espace interne (44) ;
bd) un dispositif d'introduction de gaz réfrigérant (66, 72) avec lequel du gaz réfrigérant peut être introduit dans la source de rayonnement (48) ;
be) un dispositif d'évacuation de gaz réfrigérant (78, 82, 86), avec lequel du gaz réfrigérant peut être évacué après être passé à travers la source de rayonnement (48) et après avoir prélevé la chaleur dissipée de celle-ci,
**caractérisé en ce que**
c) le dispositif d'évacuation de gaz réfrigérant (78, 82, 86) est relié au dispositif d'introduction de gaz-zones de séchage (94, 104, 106), de sorte que du gaz réfrigérant évacué peut être dirigé dans le dispositif d'introduction de gaz-zones de séchage (94, 104, 106) ;
d) il est prévu sur la trajectoire d'écoulement (78, 82, 104) du gaz à partir de la source de rayonnement (48) vers l'espace interne (44) du dispositif de séchage (26) un échangeur de chaleur (92) et/ou un dispositif d'incinération (100), par l'intermédiaire desquels le gaz peut être amené à température constante, de sorte que sa température est supérieure à la température de condensation du solvant.

8. Dispositif selon la revendication 7, **caractérisé en ce que** la source de rayonnement (48) est formée pour libérer un rayonnement avec une longueur d'onde d'environ 0,8 µm à environ 3,0 µm, en particulier d'environ 0,8 µm à 1,5 µm.

9. Dispositif selon l'une quelconque des revendications 7 à 8, **caractérisé en ce que** le gaz est l'air.

10. Installation selon l'une quelconque des revendications 7 à 9, dans laquelle l'espace interne (20) du dispositif de revêtement (12) est parcouru par un gaz conditionné, **caractérisée en ce qu'**un dispositif d'aspiration (56, 64, 66) est prévu, avec lequel le gaz conditionné est soutiré de l'espace interne (20) du dispositif de revêtement (12) et peut être dirigé au moins partiellement dans le dispositif d'introduction de gaz réfrigérant (66, 72).

11. Installation selon la revendication 7, **caractérisée en ce que** le dispositif d'aspiration (56, 64, 66) peut être relié par l'intermédiaire d'un dispositif de liaison (122, 124) au dispositif d'évacuation de gaz réfrigérant.

12. Installation selon l'une quelconque des revendications 7 à 11, **caractérisée en ce que** le boîtier (28) du dispositif de séchage (26) comprend un chemisage externe (38) et un chemisage interne (40) et la source de rayonnement (48) est disposée dans une niche (46) du chemisage interne (40).

13. Installation selon l'une quelconque des revendications 7 à 12, **caractérisée en ce qu'**il est disposé au moins une source de rayonnement (48) des deux côtés de la trajectoire de déplacement de la bande métallique (16) dans l'espace interne (44) du dispositif de séchage (26).
